# EUROPÄISCHE PATENTANMELDUNG

(11) **EP 1 742 000 A2**
(43) Veröffentlichungstag der Anmeldung: **10.01.2007**
(21) Anmeldenummer: 06013974.8
(22) Anmeldetag: 05.07.2006
(51) Int. Cl.: F25D 23/06

(54) **Kühl-und/oder Gefriergerät**

(30) Priorität: 08.07.2005 DE 202005010780 U
(71) Anmelder: Liebherr-Hausgeräte Ochsenhausen GmbH, 88416 Ochsenhausen (DE)
(72) Erfinder: Dorner, Georg, 88416 Steinhausen/Rottum (DE)
(74) Vertreter: Herrmann, Uwe

(57) **Zusammenfassung**

Die Erfindung betrifft ein Kühl- und/oder Gefriergerät mit wenigstens zwei bei unterschiedlicher Temperatur betriebenen Kompartimenten sowie mit einem die Kompartimente voneinander trennenden Zwischenboden (10), wobei der Zwischenboden (10) einteilig ausgeführt ist.

## Beschreibung

Die Erfindung betrifft ein Kühl- und/oder Gefriergerät mit wenigstens zwei bei unterschiedlicher Temperatur betriebenen Kompartimenten sowie mit einem die Kompartimente voneinander trennenden Zwischenboden.

Es sind Kühl- und/oder Gefriergeräte bekannt, die mehrere, bei unterschiedlicher Temperatur betriebene Kompartimente aufweisen, wie beispielsweise ein Kühlfach und ein Kaltlagerfach, das bei geringerer Temperatur als das Kühlfach betrieben wird. Zwischen diesen Kompartimenten befindet sich ein Zwischenboden, der wärmeisolierende Eigenschaften aufweist, um den Wärmedurchgang von einem in das andere Kompartiment gering zu halten.

Derartige üblicherweise horizontal angeordnete Zwischenböden bzw. Trennplatten haben unterschiedliche Eigenschaften aufzuweisen. Neben der genannten Isoliereigenschaft gegen Wärmeübergang wird häufig auch Formsteifigkeit, eine gute Oberflächenqualität und gegebenenfalls auch eine Befestigungsmöglichkeit z.B. für einen Temperaturfühler gefordert.

Vorbekannte Zwischenböden dieser Art sind mehrteilig aufgebaut, sie bestehen aus Ober- und Unterteil sowie aus einem Einlegeteil aus Styropor. Das Ober- und das Unterteil werden miteinander verschweißt oder verklipst. Sie sind verhältnismäßig komplex aufgebaut und großbauend. Des Weiteren ergibt sich der Nachteil, dass sich bei mehrteiligen Zwischenböden eine Geräuschentwicklung bei Belastung oder Temperatureinwirkung ergeben kann, die unerwünscht ist.

Es ist daher die Aufgabe der vorliegenden Erfindung ein Kühl- und/oder Gefriergerät der eingangs genannten Art dahingehend weiterzubilden, das dessen Zwischenboden einfach aufgebaut ist.

Diese Aufgabe wird durch ein Kühl- und/oder ein Gefriergerät mit den Merkmalen des Anspruchs 1 gelöst. Danach ist vorgesehen, dass der Zwischenboden einteilig ausgeführt ist. Daraus ergibt sich zum einen der Vorteil einer vergleichsweise einfachen Herstellung und zum anderen der Vorteil, dass die genannte bei mehrteiligen Zwischenböden auftretende Geräuschentwicklung weder bei Belastung noch bei Temperaturänderungen eintritt.

Besonders vorteilhaft ist es, wenn der Zwischenboden aus Kunststoff besteht oder Kunststoff aufweist.

Der Zwischenboden kann als Spritzgußbauteil ausgeführt sein, was den Vorteil der einfachen Herstellbarkeit in unterschiedlichen Abmessungen und Formen mit sich bringt.

Vorzugsweise handelt es sich um ein geschäumtes Spritzgußbauteil. Ein geschäumtes Spritzgussteil weist den Vorteil auf, dass der Wärmedurchgang aufgrund der Schaumstruktur gegenüber kompakten Zwischenböden verringert ist, was zur Aufrechthaltung der Temperaturdifferenz zwischen den Kompartimenten günstig ist.

Besonders vorteilhaft ist es, wenn der Zwischenboden durch ein geschäumtes Spritzgußbauteil gebildet wird oder ein geschäumtes Spritzgussbauteil aufweist, das aus einer Schmelze mit darin aufgenommenen Treibmitteln hergestellt ist. Der Zwischenboden kann somit fluidunterstützt hergestellt sein. Als Treibmittel kommen beispielsweise physikalische Treibmittel, wie Stickstoff oder CO₂ in Betracht, die direkt in die Schmelze eingespritzt werden.

Dabei ist besonders vorteilhaft, wenn die Treibmittel zugegeben werden, bevor die Schmelze in das Formnest eingespritzt wird. Dabei werden die Gase häufig im überkritischen Zustand eingespritzt.

Um ein vorzeitiges Schäumen der Schmelze im Schneckenzylinder zu verhindern, kann vorgesehen sein, dass der Schneckenzylinder mit einer Verschlussdüse ausgeführt ist. Der Kunststoff wird in vergleichsweise kurzer Zeit in das Formnest eingespritzt. Das Aufschäumen erfolgt somit nicht in dem Schneckenzylinder, sondern in dem Formnest.

Im Zusammenhang mit "atmenden Werkzeugen" ist es möglich, Zwischenböden mit Schaumstruktur im Innenbereich des Zwischenbodens und mit guter Oberflächenqualität verzugfrei herzustellen. Mit diesem Verfahren ist es möglich, dünnwandige oder auch dickwandige Bauteile bzw. Zwischenböden herzustellen. Unter einem "atmenden Werkzeug" wird verstanden, dass die mit Treibmittel versehene Kunststoffschmelze in ein vergleichsweise kleines Formnestvolumen eingespritzt wird, so dass die Schmelze den Hohlraum weitgehend oder vollständig ausfüllt. Anschließend wird durch entsprechendes Zurückziehen einer Fläche oder einer Hälfte des Formnestes das Hohlraumvolumen vergrößert, wodurch ein Schäumen nach Innen, d.h. das Innere des Bauteils erfolgen kann.

Auf diese Weise lässt sich ein Zwischenboden herstellen, der eine glatte, kompakte Oberfläche bzw. Außenhaut und einen geschäumten Kern aufweist.

Der Vorteil derartiger Zwischenböden besteht darin, dass zum einen ein kompakter Aufbau vorliegt, der sich positiv auf den Nutzinhalt des Kühl- und/oder des Gefriergerätes auswirkt. Auch wird die Geräuschentwickung, wie sie bei mehrteiligen Zwischenböden auftritt, vermieden bzw. minimiert.

Die Schaumstruktur bringt neben einer isolierenden Wirkung weitere Vorteile wie Gewichtsersparnis, Zykluszeitreduzierung sowie die Verringerung der Schließkraft des Spritzgußwerkzeuges mit sich.

Ein weiterer Vorteil besteht darin, dass auch geringe Wanddicken verzugfrei hergestellt werden können.

Die Anordnung des Zwischenbodens erfolgt erfindungsgemäß zwischen zwei Kompartimenten, die bei unterschiedlicher Temperatur betrieben werden. Besonders vorteilhaft ist es, wenn der Zwischenboden zwischen einem Kühlfach und einem Kaltlagerfach oder auch zwischen zwei Kühlfächern oder Kaltlagerfächern angeordnet ist.

Grundsätzlich bestehen für die Anordnung des Zwischenbodens bzw. für die Wahl der durch den Zwischenboden voneinander getrennten Kompartimente keinerlei Beschränkungen.

Die Erfindung betrifft ferner ein Kühl- und/oder Gefriergerät mit wenigstens zwei bei unterschiedlicher Temperatur betriebenen Kompartimenten sowie mit einem die Kompartimente voneinander trennenden Zwischenboden, wobei der Zwischenboden als Spritzgußbauteil ausgeführt ist oder ein Spritzgußbauteil aufweist. Der Zwischenboden kann bei dieser Ausgestaltung der Erfindung ein- oder auch mehrteilig ausgeführt sein. In bevorzugter Ausgestaltung ist der Zwischenboden bzw. das Gerät gemäß dem kennzeichnenden Teil eines der Ansprüche 4 bis 9 ausgeführt.

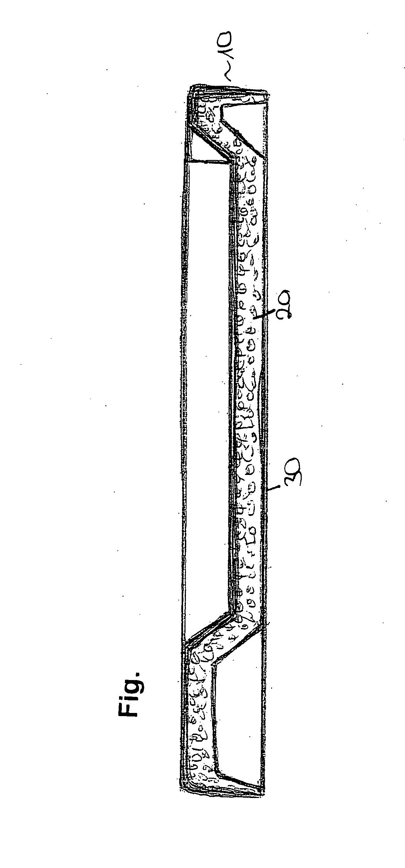

Weitere Einzelheiten und Vorteile der Erfindung werden anhand eines in der Zeichnung dargestellten Ausführungsbeispiels verdeutlicht.

Die einzige Figur zeigt eine schematische Längsschnittdarstellung durch einen erfindungsgemäßen Zwischenboden.

Der Zwischenboden 10 besteht aus einem geschäumten Kern 20 und einer glatten Außenhaut 30. Der Zwischenboden 10 wird durch ein Niederdruck-Spritzgießverfahren hergestellt, aus dem sich eine feinzellige Schaumstruktur im Kern 20 des Zwischenbodens ergibt.

Diese in der Figur dargestellte Struktur wird dadurch erhalten, dass Stickstoff oder CO₂ im überkritischen Zustand direkt in die in dem Schneckenzylinder befindliche Schmelze eingespritzt wird. Dabei wird durch eine Verschlußdüse des Spritzgießwerkzeuges sichergestellt, dass der Schäumungsvorgang nicht bereits im Schnekkenzylinder erfolgt.

Die das Treibmittel enthaltende Schmelze wird zur Herstellung des Zwischenbodens zunächst in ein Formnestvolumen eingespritzt wird, bis die Schmelze dessen Hohlraum vollständig ausfüllt.

Anschließend wird der Hohlraum des Formnestes, das heißt das Formnestvolumen vergrößert, wobei eine Fläche des Formnestes oder eine Hälfte zurückgezogen wird. In dem sich nun vergrößernden Hohlraum erfolgt das Ausschäumen nach innen, wodurch sich der ausgeschäumte Kern 20 des Zwischenbodens 10 gemäß der Figur ergibt.

Durch dieses Strukturschaum-Verfahren lassen sich auch geringe Wanddicken wie auch größere Wanddicken problemlos herstellen, wobei der Zwischenboden eine sehr gute Oberflächeneigenschaft aufweist.

Im Gegensatz zu vorbekannten Zwischenböden weist der erfindungsgemäße Zwischenboden einen sehr kompakten Aufbau auf, was sich vorteilhaft auf den Nutzinhalt des Kühl- und/oder Gefriergerätes auswirkt. Der Aufbau des Zwischenbodens ist vergleichsweise einfach, die bei bekannten Zwischenböden auftretende Geräuschentwicklung ist minimiert.

Die Schaumstruktur bewirkt eine isolierende Eigenschaft des Zwischenbodens. Als weitere Vorteile kommen eine Gewichtsersparnis, eine Zykluszeitreduzierung sowie die Verringerung der Schließkraft des Spritzgußwerkzeuges hinzu.

## Patentansprüche

1. Kühl- und/oder Gefriergerät mit wenigstens zwei bei unterschiedlicher Temperatur betriebenen Kompartimenten sowie mit einem die Kompartimente voneinander trennenden Zwischenboden,
**dadurch gekennzeichnet,**
**dass** der Zwischenboden einteilig ausgeführt ist.

2. Kühl- und/oder Gefriergerät nach Anspruch 1, **dadurch gekennzeichnet, dass** der Zwischenboden aus Kunststoff besteht oder Kunststoff aufweist.

3. Kühl- und/oder Gefriergerät nach Anspruch 1 oder 2, **dadurch gekennzeichnet, dass** der Zwischenboden ein Spritzgußbauteil ist.

4. Kühl- und/oder Gefriergerät nach einem der vorhergehenden Ansprüche, **dadurch gekennzeichnet, dass** der Zwischenboden ein geschäumtes Spritzgußbauteil ist.

5. Kühl- und/oder Gefriergerät nach einem der vorhergehenden Ansprüche, **dadurch gekennzeichnet, dass** der Zwischenboden ein geschäumtes Spritzgußbauteil ist, das aus einer Schmelze mit darin aufgenommenem Treibmittel hergestellt ist.

6. Kühl- und/oder Gefriergerät nach Anspruch 5, **dadurch gekennzeichnet, dass** es sich bei dem Treibmittel um ein physikalisches Treibmittel, insbesondere um N₂ und/oder CO₂ handelt.

7. Kühl- und/oder Gefriergerät nach einem der vorhergehenden Ansprüche, **dadurch gekennzeichnet, dass** der Zwischenboden ein durch Vergrößerung des Formnestvolumens erhaltenes Spritzgußbauteil ist.

8. Kühl- und/oder Gefriergerät nach einem der vorhergehenden Ansprüche, **dadurch gekennzeichnet, dass** der Zwischenboden eine kompakte Außenhaut aufweist.

9. Kühl- und/oder Gefriergerät nach einem der vorhergehenden Ansprüche, **dadurch gekennzeichnet, dass** der Zwischenboden zwischen einem Kühlfach und einem Kaltlagerfach oder zwischen zwei Kühlfächern oder zwischen zwei Kaltlagerfächern des Gerätes angeordnet ist.

10. Kühl- und/oder Gefriergerät mit wenigstens zwei bei unterschiedlicher Temperatur betriebenen Kompartimenten sowie mit einem die Kompartimente voneinander trennenden Zwischenboden,
**dadurch gekennzeichnet,**
**dass** der Zwischenboden als Spritzgußbauteil ausgeführt ist oder ein Spritzgußbauteil aufweist.

11. Kühl- und/oder Gefriergerät nach Anspruch 10, **dadurch gekennzeichnet, dass** das Gerät gemäß dem kennzeichnenden Teil eines der Ansprüche 4 bis 9 ausgeführt ist.
